# EUROPEAN PATENT SPECIFICATION

(11) **EP 1 946 983 B1**
(45) Date of publication and mention of the grant of the patent: **17.02.2010**
(21) Application number: 06127252.2
(22) Date of filing: 27.12.2006
(51) Int. Cl.: B60T 7/12

(54) **Device and method for automatically actuating a parking brake handle of a vehicle**
Vorrichtung und Verfahren zum automatischen Betätigen des Feststellbremsengriffs eines Fahrzeugs
Dispositif et procédé d'actionnement automatique d'une poignée de frein de stationnement d'un véhicule

(43) Date of publication of application: 23.07.2008
(73) Proprietor: Tsang, Siu Yin, Hong Kong (CN)
(72) Inventor: Tsang, Siu Yin, Hong Kong (CN)
(74) Representative: Pereira Toña, Maria Irache

(56) References cited:
- EP-A1- 0 111 778
- DE-A1- 3 020 821
- FR-A- 1 531 206
- US-A- 5 533 795
- US-A1- 2003 221 922

## Description

### FIELD OF THE INVENTION

The present invention relates to a field of a parking brake system of a vehicle, and more particularly, to a device and a method for automatically actuating a parking brake handle of a vehicle.

### BACKGROUND OF THE INVENTION

To apply a parking braking operation, it is known to lift a parking brake handle so as to tension a parking brake cable via a leverage mechanism to actuate the brake device provided on the rear wheels. Meanwhile, the brake handle may not return back due to an engagement between a ratchet wheel and a pawl. Thus, the parking brake system is reliably locked at a braking position, thereby ensuring a reliable parking of the vehicle.

When it is intended to relieve the parking braking, the brake handle may be further lifted with a short distance. Then, a push button at an end of the brake handle is pressed down to release the engagement between the ratchet wheel and the pawl by means of a predetermined mechanism, and then the brake handle is pushed down to the initial unlock position. Finally, the ratchet wheel and the pawl are again engaged to lock the parking brake in its rest position.

However, it is problematic in that the drivers, especially those having undergone a long distance and being very tired, may forget to actuate the brake handle of the parking brake system when getting off their vehicles. Thus, the vehicle without an actuated parking braking operation is liable to glide on the ground, especially when the vehicle is parked on a slope. The glided vehicle would not stop unless an enough resistant force is applied to it. That is, unless the driver is in time aware of such a gliding movement and actuates the parking brake system, the vehicle will only stop when it encounters a large scale object, which will definitely bring a great risk of an accident.

The prior art has addressed to the above mentioned problems. For example, a Chinese patent CN002119881.9 has disclosed a warning system for a parking brake of a vehicle, in which two switches are mounted respectively below a seat of the driver and at the parking brake handle, and a warning light as well as a warning speaker is provided on a front panel of the vehicle. When the driver leaves his seat without actuating the parking brake handle, the warning light will lighten and the warning speaker will generate predetermined sounds so as to remind the driver to actuate the parking brake handle. However, if the driver does not notice these alert signals and leaves the vehicle, a gliding risk of the vehicle still can not be eliminated. Another Chinese patent CN88205069.9 discloses an alert and automatic control system for a parking brake of a vehicle, in which an automatic control means is mentioned besides the above mentioned alert system. However, there is only a schematic diagram showing its concept and no detailed structures. Another example of a parking brake safety system is given by the prior art document US 5,533,795.

### SUMMARY OF THE INVENTION

The present invention is defined according to the appended set of claims and aims to provide a device which could eliminate or at least alleviate the above-mentioned problems of the parking brake system.

According to the present invention, there is provided a device for automatically actuating a parking brake handle of a vehicle, comprising a handle actuating unit for automatically actuating said parking brake handle, wherein said handle actuating unit has an actuation component connected in series with a power supply on said vehicle, a first normally open switch arranged in association with a vehicle door, a second normally open switch arranged in association with a driver seat, and a normally closed switch arranged with said parking brake handle, so that when the driver gets off the vehicle without lifting said handle, said first and second normally open switches both switch to an "ON" status, and thus said actuation component will be powered so as to allow said handle actuating unit to lift said handle to a service position, said actuation component is a motor, and said handle actuating unit further comprises a supporting member fixed to said vehicle, said motor being mounted to said supporting member, a cam operatively coupled to an output shaft of said motor, a lever with one end pivotably connected to said supporting member and another free end serving as a first driving portion, said lever being provided with a first driven portion facing said cam so as to be propelled by said cam, a first return spring with one end connected to said supporting member and another end connected to said lever, said first return spring being configured to act against a rotation of said lever driven by said cam and to thus force said lever towards its original position, a second driven portion provided on said parking brake handle and facing said first driving portion so as to be driven by said first driving portion of said lever.

In one embodiment, the device comprises a switch assembly including a base member pivotably mounted to said supporting member, said normally closed switch being mounted to said base member, a push button fitted to said base member, for changing a status of said normally closed switch from "ON" to "OFF" when pressed down, a third driven portion connected to said base member and facing said second driven portion so as to be propelled by said second driven portion, a second return spring with one end connected to said supporting member and another end connected to said switch assembly, said second return spring being configured to act against a rotation of said switch assembly driven by said second driven portion and to thus force said switch assembly towards its original position, a second stopper provided on said supporting member and positioned on a return path of said switch assembly so as to prevent an excess return of said switch assembly, wherein said device further includes a press member facing said push button for selectively pressing down and releasing said push button.

In one embodiment, said first and second return springs are incorporated into one spring, which has one end connected to said one end of said lever pivotably connected to said supporting member, and another end connected to said switch assembly.

In one embodiment, a first stopper is provided on said supporting member and positioned on a return path of said lever so as to prevent an excess return of said lever.

In one embodiment, said press member is fixed to one end of said lever connected to said supporting member.

In one embodiment, the device includes a transmission means connected to said output shaft of said motor, wherein said cam is mounted to an output shaft of said transmission means.

In one embodiment, said transmission means is a gear box.

In one embodiment, said handle actuating unit further comprises a pressurized gas source provided on said vehicle, a cylinder formed with an pressurized gas inlet in a first end portion thereof which is connected to said pressurized source via a pipe, said cylinder being further provided with a piston rod therein adapted to push up said parking brake handle to its actuated position, said piston rod comprising a plate member and a rod member, a circumferential surface of said plate member being engaged with an inner surface of said cylinder with a predetermined gap formed therebetween, said rod member having an end fixed to said plate member and another end extending outwards through a hole formed in a second end portion of said cylinder opposite to said first end portion, an aperture being formed in said second end portion of said cylinder, said piston rod being provided with a return spring, and wherein said actuation component is such an electric-mechanical choking member that is located at a predetermined position along said pipe, and designed so that in its rest condition, it chokes said pipe so as to prevent a flow of the pressured gas from said gas source to said cylinder, and once actuated it switches to a condition of allowing entry of pressurized gas from said gas resource into said cylinder to thus push outwards said piston rod and push up said parking brake handle.

In one embodiment, said electric-mechanical choking member is a solenoid valve.

According to one aspect of the present invention, there is provided a method of automatically actuating a parking brake handle of a vehicle, comprising the steps of providing a power supply, providing a first normally open switch arranged in association with a vehicle door, providing a second normally open switch arranged in association with a driver seat, providing a normally closed switch arranged in association with said parking brake handle, providing a handle actuating unit for automatically actuating said parking brake handle, said handle actuating unit having an actuation component which when powered allow said handle actuating unit to lift said handle to a service position, and connecting said power supply, said first normally open switch, said second normally open switch, said normally closed switch, with said actuation component in series.

With the device for automatically actuating a parking brake handle of a vehicle according to the present invention, the parking brake system could be ensured to work even if the driver forgets initiatively actuating the parking brake handle, and therefore a risk of a glide movement of the vehicle could be prevented.

### BRIEF DESCRIPTION OF DRAWINGS

FIG. 1 is a schematic diagram of a control circuit of a device for automatically actuating a parking brake handle of a vehicle according to an embodiment of the present invention;
FIG. 2 is an exploded view of a part of the device for automatically actuating the parking brake handle of the vehicle according to the present invention;
FIG. 3 is a schematic view of the device for automatically actuating the parking brake handle of the vehicle according to the present invention, in which the parking brake handle is in a first position;
FIG. 4 is a schematic view of the device for automatically actuating the parking brake handle of the vehicle according to the present invention, in which the parking brake handle is in a second position;
FIG. 5 is a schematic view of the device for automatically actuating a parking brake handle of the vehicle according to the present invention, in which the parking brake handle is in a third position;
FIG. 6 is a schematic view of another embodiment of the device for automatically actuating a parking brake handle of the vehicle according to the present invention;
FIG. 7 is a schematic view of yet another embodiment of the device for automatically actuating a parking brake handle of the vehicle according to the present invention; and
FIGS. 8 and 9 are schematic views illustrating another embodiment of the device for automatically actuating a parking brake handle of the vehicle according to the present invention.

### DETAILED DESCRIPTION OF PREFERRED EMBODIMENTS

Preferred embodiments of the invention will be described below in detail with reference to the drawings.

### FIRST EMBODIMENT

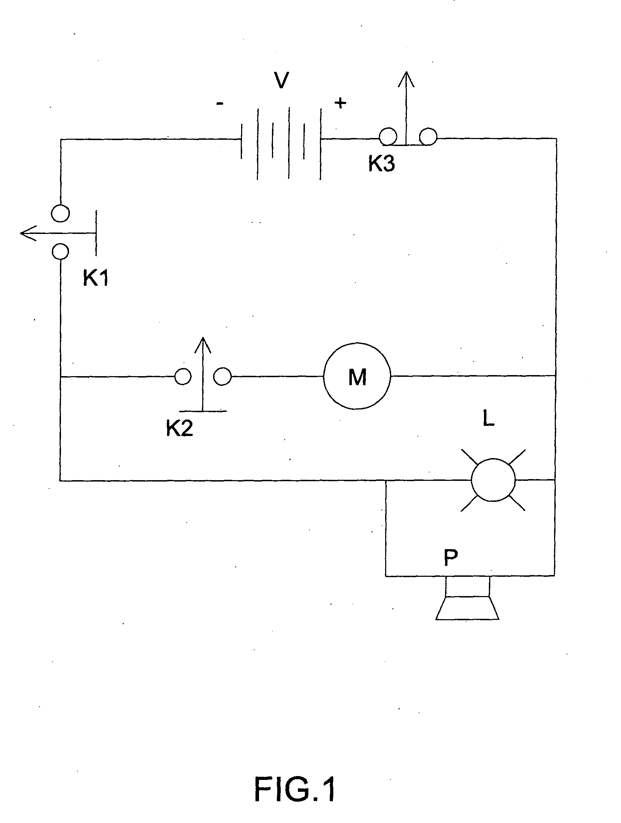

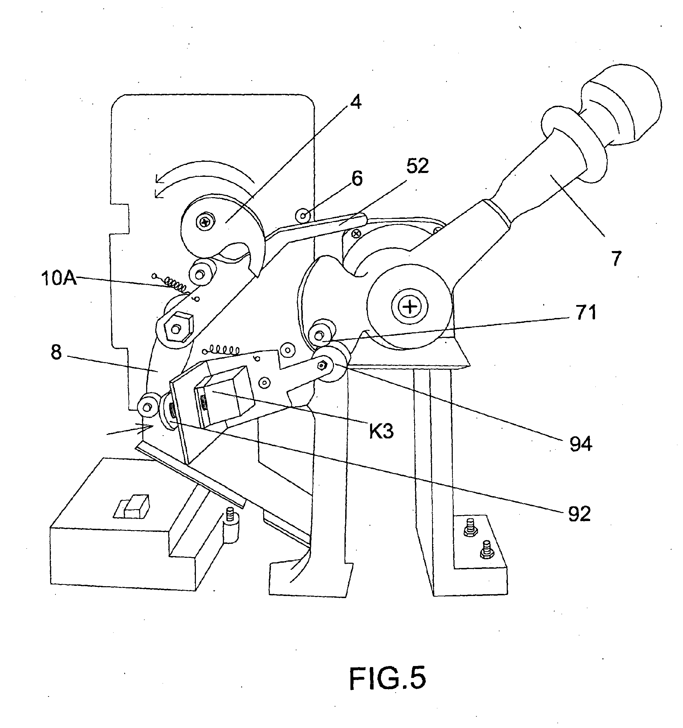

FIGS. 1-7 illustrate a first embodiment of the device for automatically actuating a parking brake handle of a vehicle according to the present invention.

Particularly, FIG. 1 is a schematic diagram of a control circuit of a device for automatically actuating a parking brake handle of a vehicle according to the embodiment. As shown, the control circuit generally includes a power supply V, a first normally open switch K1 as a main switch, a normally closed switch K3, and two branch circuits.

The power supply V may be shared with certain components of the vehicle such as a headlight. That is, it is not necessary to arrange an additional power supply for the device according to the present invention.

The first normally open switch K1 is arranged in association with a vehicle door. Herein, the term of "provided in association with a vehicle door" means that, if the vehicle door is in a closed condition, the first normally open switch K1 will be kept at an "OFF" status, and if the vehicle door is in an opened condition, the first normally open switch K1 will be switched to an "ON" status.

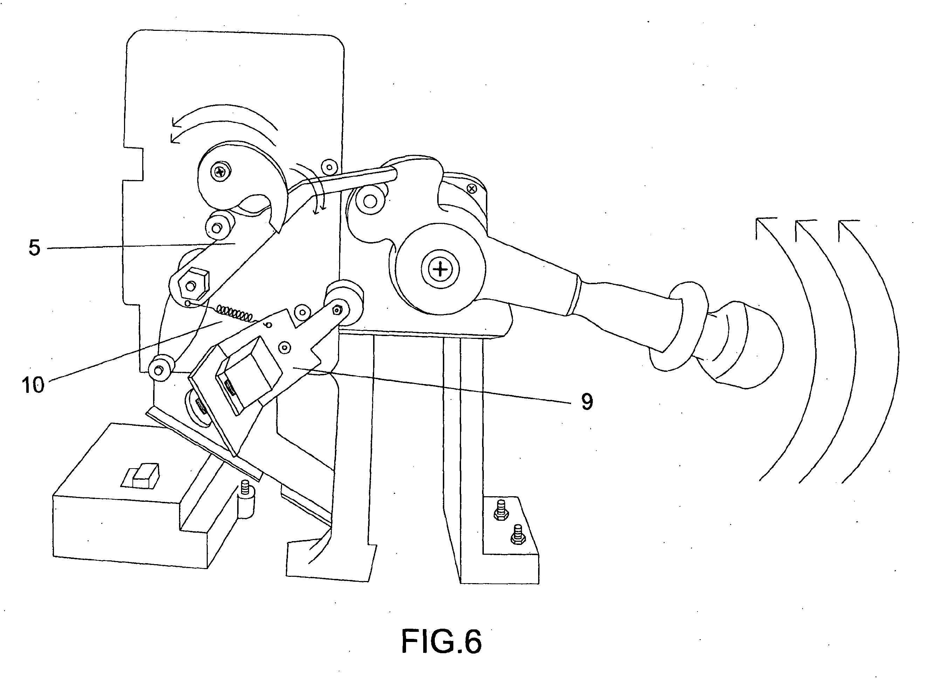

The normally closed switch K3 is arranged in association with the parking brake handle. Herein, the term of "arranged in association with the parking brake handle" means that, unless the parking brake handle is lifted to its locked service position (i.e. as shown in FIG. 6), the normally closed switch K3 will keep an "ON" status.

As to the two branch circuits, the first one includes a motor M and a second normally open switch K2. The motor M will serve as a driving source of the device according to the present invention. The second normally open switch K2 is arranged in association with a driver seat. Herein, similarly, the term of "arranged in association with a driver seat" means that, if the driver sits on his seat, the second normally open switch K2 will be kept at an "OFF" status, and if the driver leaves his seat, the second normally open switch K2 will be switched to an "ON" status. The second normally open switch K2 may be physically provided below the driver seat.

The second branch circuit includes a warning light L and a warning speaker P connected in parallel with each other. Physically, the warning light L and the warning speaker P are provided on a front panel in a cab of the vehicle so as to facilitate to warn the driver.

An operational principle of the system according to the present invention will be briefly described.

During a normal running of a vehicle, since the vehicle door is closed and the parking brake handle is in its rest position, the first normally open switch K1 and the normally closed switch K3 will be respectively kept at an "OFF'' status and an "ON" status. At this point, there is no electric current flowing through the first and second branch circuits. Consequently, the motor M is not energized and therefore the device for automatically actuating the parking brake handle according to the present invention will not be actuated. Meanwhile, the warning light L and the warning speaker P will not work to generate warning signals.

Hereinafter, a situation that the driver stops the vehicle and gets off the vehicle will be discussed. The first normally open switch K1 will be switched to an "ON''' status once the driver opens the door. Also, the second normally open switch K2 will be switched to an "ON" status once the driver leaves his seat. In addition, the normally closed switch K3 will be kept at an "ON'' status unless the parking brake handle is lifted to its fully service position. Thus, if the driver leaves his seat without lifting the parking brake handle to its service position and opens the door, the first and the second branch circuits will be both electrically connected to the power supply V. Thus, the warning light L will illuminate and the warning speaker P will generate warning sounds. At the same time, the motor M will operate to drive the device and bring the parking brake handle to the above-mentioned service position. The process that the parking brake handle is shifted from its rest position to its locked service position may be finished in a very short time period, such as two or three seconds. It means that the above said process could be finished during the period of opening the door. Accordingly, the parking brake system is actuated and the glide of the vehicle may be prevented. Additionally, once the parking brake handle reaches its locked service position, the normally closed switch K3 as another main switch will be switched to an "OFF" status, as discussed above, and therefore the two branches will be powered off.

Next, the driver may close the vehicle door and thus the first normally open switch K1 will again break off electric currents in the whole circuit.

Thus, a device for automatically actuating the parking brake handle is achieved according to the present invention.

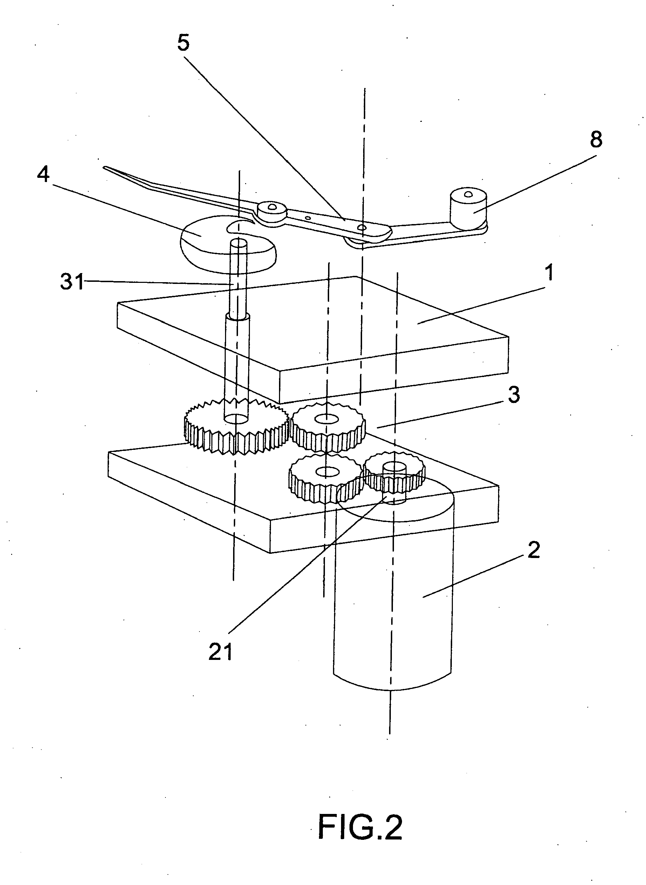

Hereinafter, a structure of the device for automatically actuating the parking brake handle will be described in detail with referent to FIGS. 2-7.

As shown in these drawings, a motor 2 (being equivalent to the motor M in FIG. 1) as a driving source of the device for automatically actuating the parking brake handle according to the present invention is mounted to a supporting member 1 which is fixed to the vehicle and near the parking brake handle. An output shaft 21 of the motor 2 is connected to a gear mechanism 3, thereby decreasing an output rotation speed and enhancing an output torque. Herein, the gear mechanism 3 could be replaced by any other suitable transmission mechanism without going beyond the scope of the present invention. A cam 4 having a predetermined profile is fixed to an output shaft of the gear mechanism 3 and is adapted to propel a lever 5 to actuate the parking brake handle 7 when necessary, which will be described in detail hereinafter.

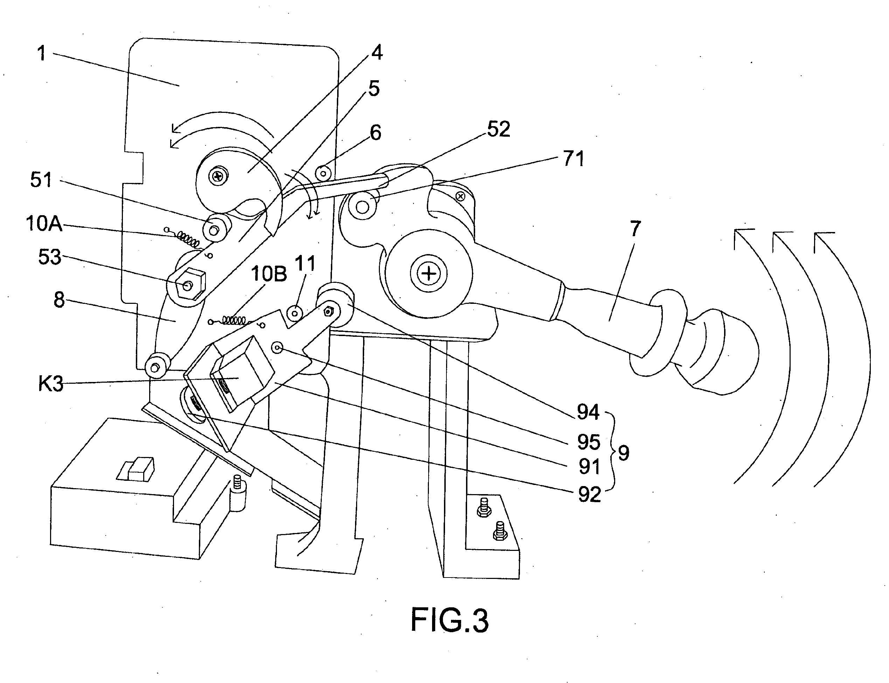

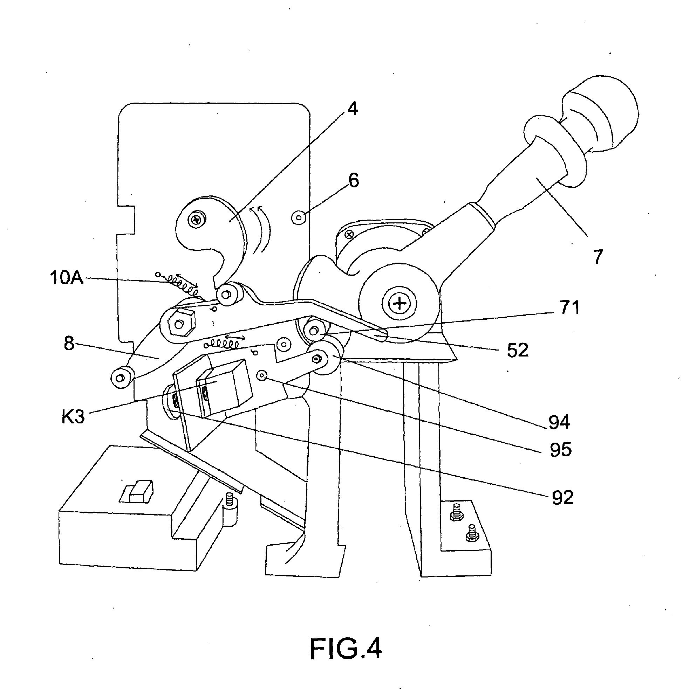

The lever 5 is arranged to rotate about a pivot shaft 53 on the supporting member 1 by means of the cam 4. For this, the lever 5 is provided with a first driven portion 51 at a position thereof facing the cam 4, which will be engaged with the cam 4 in use, as shown in FIGS. 3 and 4. In the illustrated embodiments, the lever 5 has one end portion pivotably connected to the pivot shaft 53, and another free end portion serving as a first driving portion 52 which operates to propel a first driven portion 71 provided at a position on the parking brake handle 7 facing the first driving portion 52. In addition, the lever 5 is equipped with a first return spring 10A which is adapted to act against a rotation of the lever 5 driven by the cam 4, and to accumulate a restoration force to thus force the lever 5 towards its initial position. For this, one end of the first return spring 10A is connected to the supporting member 1, and the other end of the first return spring 10A is connected to a suitable position of the lever 5. Further, a first stopper 6 is provided on the supporting member 1, which is positioned on the return path of the lever 5 so as to prevent an excess return of the lever 5.

Now a preferred embodiment of the normally closed switch K3 will be described. As shown in drawings, a switch assembly 9 is pivotably fitted to the supporting member 1, which includes a base member 91 pivotably fitted to a pivot shaft 95 on the supporting member 1, the normally closed switch K3 fixed to the base member 91, a push button 92 which is fitted to the base member 91 and is facing the normally closed switch K3 to change a status of the normally closed switch K3 from "ON" to "OFF" when pressed down, a third driven portion 94 which is formed on or connected to the base member 91 and is facing the second driven portion 71 so as to be propelled by the second driven portion 71 and thus rotate the switch assembly 9. The switch assembly 9 is also equipped with a second return spring 10B which is adapted to act against a rotation of the switch assembly 9 driven by the second driven portion 71, and to accumulate a restoration force to thus force the switch assembly 9 to rotate back towards its initial position. Similarly, a second stopper 11 is provided on the supporting member 1, which is positioned on a return path of the switch assembly 9 so as to prevent an excess return of the switch assembly 9.

In addition, a press member 8 is provided to selectively press down the push button 92. As shown in FIGS. 3-5, the press member 8 may be a rod with one end fixed to or integrally formed with the end of the lever 5 which is pivotably fitted to the supporting member 1. The other end of the press member 8 may press down the push button 92 when the switch assembly 9 rotates in a clockwise direction to a limit position by means of the second driven portion 71 and thus change the status of the normally closed switch K3 to an "OFF" status.

Hereinafter an operation process of the device for automatically actuating the parking brake according to the present invention will be described.

When the vehicle is running, the parking brake handle is in a rest position and the device for automatically actuating the parking brake handle is also in its initial status. At that time, a portion of the cam with a relatively shorter radius vector contacts with the first driven portion 51. The lever 5 and the press member 8, and the switch assembly 9 all stay in a stationary status. The push button 92 keeps a distance from the press member 8. Thus, the normally closed switch K3 is in an "ON" status.

When the vehicle is parked, if the driver does not lift the parking brake handle 7, the normally closed switch K3 is kept in an "ON" status. When the driver leaves his seat and opens the door, the first normally open switch K1 provided in association with the vehicle door and the second normally open switch K2 provided in association with the driver seat will both turn to "ON" status. Thus, on the one hand, the warning light L illuminates and the warning speaker P in the second branch circuit will generate sounds so as to remind the driver to lift the parking brake handle 7. On the other hand, the motor 2 in the first branch circuit will rotate to drive the cam 4 and then actuate the device to achieve the following operations.
1. Firstly, the cam 4 is rotated by the motor 2 via the transmission mechanism 3, whereby a portion of the cam 4 with an increased radius vector acts on the first driven portion 51. Thus, the lever 5 and the press member 8 are rotated in a clockwise direction. Consequently, the first driving portion 52 forces the second driven portion 71 so that the parking brake handle 7 is rotated in a counter-clockwise direction. At the same time, the first return spring 10A is tensioned.
2. As the handle 7 is further rotated, the second driven portion 71 contacts with the third driven portion 94 to thus, temporarily as a driving member, force the switch assembly 9 to rotate in a clockwise direction, while the second return spring 10B is tensioned.
3. As the cam 4 contacts with the first driven portion 51 with its maximum radius vector portion, the handle 7 arrives its service position (i.e. a position ensuring the parking brake to work) and is locked at this position by means of the aforementioned engagement between a ratchet wheel and a pawl. Meanwhile, the second driven portion 71 and therefore the third driven portion 94 also arrives their limit positions, respectively. Accordingly, the switch assembly 9 reaches a limit position in the clockwise direction.
4. The cam 4 further rotates and does not propel the first driven portion 52 any more so that the lever 5 as well as the press member 8 will return to their initial positions due to a restoration force of the first return spring 10A. The push button 92 is then pressed down by the returned press member 8 so as to switch off the normally closed switch K3. Consequently, the two branches are both powered off. The motor does not rotate and generating of alert signals is ceased.
5. When the driver gets off the vehicle and closes the vehicle door, the first normally open switch K1 provided in association with the vehicle door is also switched off.
6. When the driver gets on the vehicle and intends to resume driving the vehicle, the parking brake handle 7 may be manually released, and thus the switch assembly 9 is returned to its initial position by means of the second return spring 10B so that the press member 8 does not press the push button 92 and the normally closed switch K3 is returned to its initial "ON" status.

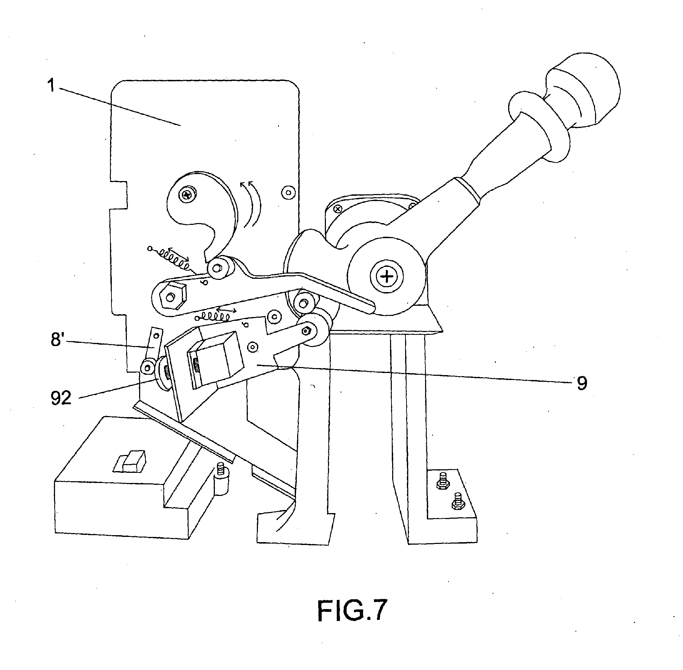

It should be obvious that changes to certain details of the preferred embodiment can be made without departing from the spirit and scope of the invention defined in the appended claims. For example, in another embodiment, the lever 5 and the switch assembly 9 may share one common return spring 10, as shown in FIG. 6. In addition, in yet another embodiment, as shown in FIG. 7, a press member 8' may be separately fixed to the supporting member 1, and is positioned to press down the push button 92 when the switch assembly 9 rotates to the above mentioned limit position.

### SECOND EMBODIMENT

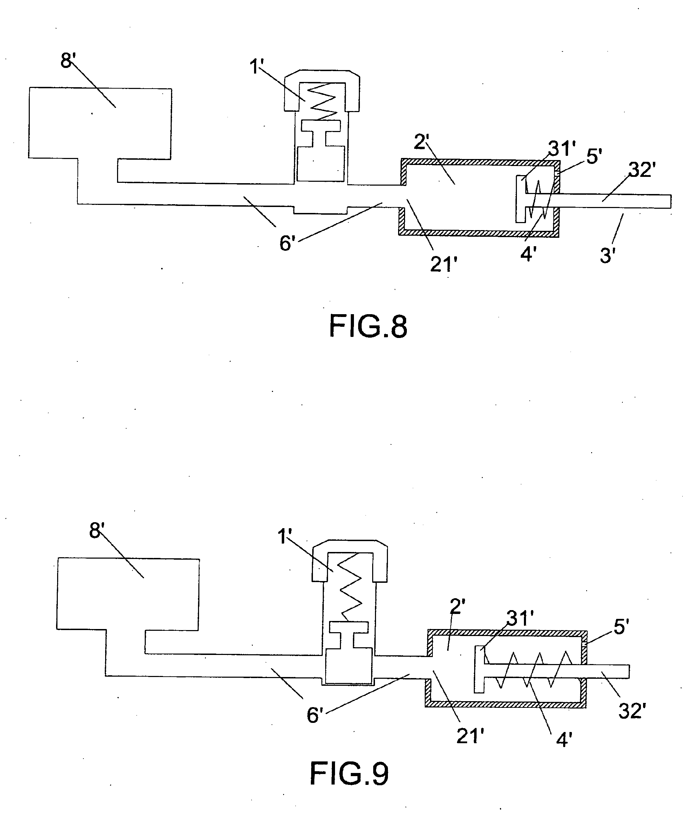

According to the spirit of the present invention, other actuating mechanisms instead of the above-mentioned motor actuated one, such as a pneumatically actuated mechanism, could be used. FIGS. 8 and 9 are just schematic views illustrating a pneumatically actuated embodiment of the device for automatically actuating a parking brake handle of the vehicle according to the present invention. Further, FIGS. 8 and 9 illustrate a rest state and a service state of the embodiment, respectively.

As shown in FIGS. 8 and 9, the present embodiment includes a pressurized gas source 8' which may be separately arranged on the vehicle or is one inherently carried by the vehicle itself, a cylinder 2' arranged beneath the parking brake handle 7 and formed with an pressurized gas inlet 21' in its first end portion (i.e. the left end as shown in FIGS. 8 and 9) which is connected to the pressurized source 8' via a pipe 6'.

Further, the cylinder 2' is provided therein with a piston rod 3' adapted to push up the parking brake handle 7 to its actuated position. The piston rod 3' comprises a plate member 31' having a function similar to a piston, and a rod member 32' with an end fixed to the plate member 31' and another end extending through a hole formed in a second end portion of the cylinder 2' opposite to the first end portion. Here, a circumferential surface of the plate member 31' of the piston rod 3' is not precisely cooperated with a cylindrical inner surface of the cylinder 2'. That is, there is a predetermined gap between the cylindrical inner wall of the cylinder 2' and the circumferential surface of the plate member 31' of the piston rod 3'. The function of the gap will be described in detail hereinafter. Moreover, an aperture 5' is also formed in second end surface of the cylinder 2'.

In addition, a return spring 4' is arranged within the cylinder 2', which has an end connected to an end wall of the cylinder 2' and an opposite end connected to the piston rod 3'.

At a certain location along the pipe 6', there is provided an electric-mechanical choking member 1'. The electric-mechanical choking member 1' is such a member that in a rest condition, it will choke the pipe 6' so as to prevent a flow of the pressured gas from the gas source 8' to the cylinder 2', and once actuated it will switch to a condition of allowing entry of pressurized gas from the gas resource 8' into the cylinder 2', which may be a solenoid valve or other suitable devices for choking a flow of the pressurized gas.

The present embodiment has a control circuit similar to that of the first embodiment as shown in FIG.1. The difference lies in that the motor M in FIG.1 is substituted with the electric-mechanical choking member 1 in the present embodiment.

Therefore, in circumstances that the motor M is to be powered on in the first embodiment, the electric-mechanical choking member 1 instead of the motor M will be powered on in the second embodiment. Once actuated, the electric-mechanical choking member 1'will switch from its rest condition to a service condition of allowing entry of pressurized gas from the gas resource 8' to the cylinder 2', as mentioned above. As pressurized gas flows into the cylinder 2', the piston rod 3' will be pushed outwards to push up the parking brake handle 7 due to a pressure difference between two sides of the plate member 31' of the piston rod 3', and meanwhile the return spring 4' is compressed. Once the parking brake handle 7 is pushed to its actuated position, the handle brake system works and prevents gliding of the vehicle.

The whole volume of the cylinder 2'' is divided into two portions by the plate member 31' of the piston rod 3'. During the above-mentioned process, the air in a portion of the cylinder 2' with the volume decreased (i.e. the right portion of the plate member 31' in FIGS.8 and 9) is discharged to outside via the aperture 5'.

Next, in circumstances that the motor M is to be powered off in the first embodiment, the electric-mechanical choking member 1' will be also powered off in the second embodiment. That is, the electric-mechanical member 1' will switch to its rest position where it will again choke the pipe 6' so as to prevent a flow of the pressured gas from the gas source 8' to the cylinder 2'. Consequently, the piston rod 3' will return to its initial position under a return force of the return spring 4'. At this point, the gap between the circumferential surface of the plate member 31' of the piston rod 3' and the cylindrical inner surface of the cylinder 2' allows discharging of the gas in the side portion of the cylinder 2' with the volume decreased (i.e. the left portion of the plate member 31' in FIGS. 8 and 9) and thus allow returning back of the piston rod 3'. Thus, when the driver returns back to the vehicle and intends to resume driving the vehicle, the piston rod 3' will not interfere releasing of the parking brake handle.

## Claims

1. A device for automatically actuating a parking brake handle (7) of a vehicle, comprising a handle actuating unit for automatically actuating said parking brake handle,
wherein said handle actuating unit has an actuation component (M;2;1') connected in series with a power supply (V, 8') on said vehicle, a first normally open switch (K1) arranged in association with a vehicle door, a second normally open switch (K2) arranged in association with a driver seat, and a normally closed switch (K3) arranged with said parking brake handle, so that when the driver gets off the vehicle without lifting said handle, said first and second normally open switches both switch to an "ON" status, and thus said actuation component will be powered so as to allow said handle actuating unit to lift said handle to a service position,
wherein said actuation component is a motor (M,2), and said handle actuating unit further comprises
a supporting member (1) fixed to said vehicle, said motor being mounted to said supporting member,
a cam (4) operatively coupled to an output shaft (21) of said motor,
a lever (5) with one end pivotably connected to said supporting member (1) and another free end serving as a first driving portion (52), said lever being provided with a first driven portion (51) facing said cam so as to be propelled by said cam,
a first return spring (10A) with one end connected to said supporting member and another end connected to said lever (5), said first return spring (10A) being configured to act against a rotation of said lever driven by said cam and to thus force said lever towards its original position,
a second driven portion (71) provided on said parking brake handle (7) and facing said first driving portion (52) so as to be driven by said first driving portion of said lever.

2. The device for automatically actuating a parking brake handle of a vehicle according to claim 1, further comprising a switch assembly (9) including:
a base member (91) pivotably mounted to said supporting member (1), said normally closed switch (K3) being mounted to said base member,
a push button (92) fitted to said base member (91), for changing a status of said normally closed switch from "ON" to "OFF" when pressed down,
a third driven portion (94) connected to said base member (91) and facing said second driven portion (71) so as to be propelled by said second driven portion,
a second return spring (10B) configured to act against a rotation of said switch assembly driven by said second driven portion and to thus force said switch assembly towards its original position,
a second stopper provided (11) on said supporting member and positioned on a return path of said switch assembly so as to prevent an excess return of said switch assembly,
wherein said device further includes a press member (8) facing said push button for selectively pressing down and releasing said push button (92).

3. The device for automatically actuating a parking brake handle of a vehicle according to claim 2, wherein said first and second return springs are incorporated into one spring (10), which has one end connected to said one end of said lever pivotably connected to said supporting member, and another end connected to said switch assembly.

4. The device for automatically actuating a parking brake handle of a vehicle according to anyone of claims 1 to 3, wherein a first stopper (6) is provided on said supporting member and positioned on a return path of said lever so as to prevent an excess return of said lever.

5. The device for automatically actuating a parking brake handle of a vehicle according to claim 2 and to anyone of claims 1 to 4, wherein said press member (8) is fixed to one end of said lever (5) connected to said supporting member.

6. The device for automatically actuating a parking brake handle of a vehicle according to anyone of claims 1 to 5, further including a transmission means (3) connected to said output shaft (21) of said motor (M;2), wherein said cam (4) is mounted to an output shaft (31) of said transmission means.

7. The device for automatically actuating a parking brake handle of a vehicle according to claim 6, wherein said transmission means is a gear box (3).

8. A method of automatically actuating a parking brake handle of a vehicle, comprising the steps of
providing a power supply (V, 8'),
providing a first normally open switch (K1) arranged in association with a vehicle door,
providing a second normally open switch (K2) arranged in association with a driver seat,
providing a normally closed switch (K3) arranged in association with said parking brake handle,
providing a handle actuating unit for automatically actuating said parking brake handle, said handle actuating unit having an actuation component (M;2;1') consisting of a motor (M,2) which when powered allow said handle actuating unit to lift said handle (7) to a service position,
connecting said power supply, said first normally open switch, said second normally open switch, said normally closed switch, with said actuation component in series,
mounting said motor on a supporting member (1) fixed to said vehicle,
operatively coupling a cam (4) to an output shaft (21) of said motor,
pivotably connecting one end of a lever (5) to said supporting member (1) and serving another free end as a first driving portion (52),
providing said lever with a first driven portion (51) facing said cam so as to be propelled by said cam,
connecting one end of a first return spring (10A) to said supporting member and connecting another end to said lever (5),
configuring said first return spring (10A) to act against a rotation of said lever driven by said cam and to thus force said lever towards its original position, and
providing a second driven portion (71) on said parking brake handle (7) and facing said first driving portion (52) so as to be driven by said first driving portion of said lever.

## Patentansprüche

1. Ein Gerät zur automatischen Auslösung eines Parkbremsen-Handgriffs (7) für ein Fahrzeug. Besagtes Gerät besteht aus: einer Handgriffs-Auslöseeinheit zur automatischen Auslösung des besagten Parkbremsen-Hebels, wobei besagte Handgriffs-Auslöseeinheit über einen Auslöse-Bauteil (M;2,1 ' ) verfügt, welcher in Reihenschaltung mit einer Stromquelle (V, 8' ) im besagten Fahrzeug verbunden ist; einem ersten normalerweise offenen Schalter (K1), der in Verbindung mit der Fahrzeugtür angebracht ist, einem zweiten normalerweise offenen Schalter (K2), der in Verbindung mit dem Fahrersitz angebracht ist; sowie einem normalerweise geschlossenen Schalter (K3), der zusammen mit dem besagten Parkbremsen-Hebel angebracht ist, so dass - falls der Fahrer aus dem Fahrzeug aussteigt, ohne den besagten Handgriff anzuziehen - die beiden normalerweise offenen Schalter beide in einen ON-Status (OFFEN-Status) schalten und der besagte Auslöse-Bauteil mit Strom versorgt wird, was es der besagten Handgriffs-Auslöseeinheit erlaubt, den Hebel in eine Betriebsposition zu heben.
Dabei handelt es sich bei dem besagten Auslöse-Bauteil um einen Motor (M,2).
Die besagte Hebel-Auslöseeinheit beinhaltet darüber hinaus: ein tragendes Element (1), das an besagtem Fahrzeug fest angebracht ist, während der besagte Motor auf dem besagten tragenden Element angebracht ist;
eine Nocke (4), die funktionsmäßig mit einer Abtriebswelle (21) des besagten Motors verbunden ist;
ein Hebel (5), bei dem das eine Ende schwenkbar mit dem besagten tragenden Element (1) verbunden ist und dessen anderes, freies Ende als ein erstes Antriebsteil (52) dient, wobei der besagte Hebel mit einem ersten angetriebenen Teil (51) ausgestattet ist, welches der besagten Nocke zugewandt ist, so dass es durch die besagte Nocke angetrieben werden kann;
einer ersten Rückstellfeder (10A), bei der Ende mit besagtem tragenden Element verbunden und deren anderes Ende mit mit besagtem Hebel (5) verbunden ist, wobei die besagte erste Rückstellfeder (10A) so konfiguriert ist, dass sie gegen die Drehung des besagten Hebels wirkt, welcher durch die besagte Nocke angetrieben wird, so dass sie den Hebel In seine ursprüngliche Position heben kann;
einen zweites angetriebenes Teil (71), das auf dem besagten Parkbremsen-Handgriff (7) vorhanden ist und dem ersten Antriebsteil (52) zugewandt ist, so dass es durch das besagte erste Antriebsteil des besagten Hebels angetrieben worden kann,

2. Ein Gerät zum automatischen Auslösen eines Parkbremsen-Handgriffs für ein Fahrzeug nach Anspruch 1, mit einem zusätzlichen Schalter-Bausatz (9), der Folgendes beinhaltet:
ein Sockelelement (91), welches schwenkbar auf besagtem tragenden Element (1) angebracht ist; ein normalerweise geschlossener Schalter (K3), der an besagtem Sockelelement angebracht ist;
ein Druckknopf (92), welcher an besagtem Sockelelement (91) angebracht ist und der zum Wechel des Status des normalerweise geschlossenen Schalters von "ON" (AN) zu "OFF" (AUS) führt, falls er heruntergedrückt wird;
ein dritter angetriebener Teil (94), welcher mit besagtem Sockelelemnt (91) verbunden und dem besagten zweiten angetriebenen Teil (71) zugewandt ist, so dass er von besagtem zweiten angetriebenen Teil angetrieben wird;
eine zweite Rückstellfeder (10B), die so konfiguriert ist, dass sie gegen die Drehung des Schalterbausatzes wirkt, welcher vom zweiten angetriebenen Teil angetrieben wird, so dass sie den Schalterbausatz in seine ursprüngliche Position bringt;
ein zweiter Stopper (11), welcher auf besagtem tragenden Element positioniert ist und sich auf dem Rückleitungspfad des besagten Schalterbausatzes befindet, um eine übermäßige Rückführung des besagten Schalterbausatzes zu verhindern.
Besagtes Gerät beinhaltet weiterhin ein Druckelement (8), welches dem Druckknopf zugewandt ist und zum wahlweisen Herunterdrücken und Lösen des besagten Druckknopfes (92) dient.

3. Das Gerät zum automatischen Auslösen eines Parkbremsen-Handgiffs für ein Fahrzeug nach Anspruch 2, wobei die erste und zweite Rückstellfeder in eine einzelne Feder (10) initegriert sind, bei der das eine Ende mit dem Ende des besagten Hebels verbunden ist, welcher schwenkbar mit dem besagten tragenden Element verbunden ist und das andere Ende mit dem besagten Schalterbausatz verbunden ist.

4. Das Gerät zum automatischen Auslösen eines Parkbremsen-Hebeis für ein Fahrzeug nach den Ansprüchen 1 bis 3, wobei ein erster Stopper (6) auf besagtem tragendem Element vorhanden ist und sich auf der Rückleitungspfad des besagten Hebels befindet, um eine übermäßige Rückführung des besagten Hebels zu verhindern.

5. Das Gerät zum automatischen Auslösen eines Parkbremsen-Handgriffs für ein Fahrzeug nach Anspruch 2 sowie nach allen Ansprüchen 1 bis 4, wobei ein besagtes Druckteil (8) an einem Ende des besagten Hebels (5) angebracht und mit besagtem tragenden Element verbunden ist.

6. Ein Gerät zum automatischen Auslösen eines Parkbremsen-Handgriffs für ein Fahrzeug nach den Ansprüchen 1 bis 5, welches zusätzlich ein Hilfsmittel zur Kraftübertragung (3) beinhaltet, welche mit der besagten Abtriebswelle (21) des besagten Motors (M;2) verbunden ist, wobei eine Nocke (4) an einer Abtriebswelle (31) des besagten Hilfsmittels zur Kraftübertragung angebracht ist.

7. Ein Gerät zum automatischen Auslösen eines Parkbremsen-Handgriffs für ein Fahrzeug nach Anspruch 6, wobei das Hilfsmittel zur Kraftübertragung aus einem Getriebe (3) besteht.

8. Eine Methode zur automatischen Auslösung eines Parkbremsen-Handgriffs für ein Fahrzeug. Besagte Methode besteht aus folgenden Schritten:
Bereitstellung einer Stromquelle (V,8' );
Bereitstellung eines ersten normalerweise offenen Schalters (K1), der in Verbindung mit der Fahrzeugtür angebracht ist;
Bereitstellung eines zweiten normalerweise offenen Schalters (K2), welcher in Verbindung mit dem Fahrersitz angebracht ist;
Bereitstellung eines normalerweise geschlossenen Schalters (K3), der in Verbindung mit besagtem Parkbremsen-Handgriff angebracht ist;
Bereitstellung einer Handgriffs-Auslöseeinheit zur automatischen Auslösung des besagten Parkbremsen-Handgriffs, wobei die besagte Hangriffs-Auslöseeinheit über eine Auslöse-Komponente (M:2;1' ) verfügt, welche aus einem Motor (M,2) besteht, der es nach seiner Inbetriebsetzung der besagten Handgriffs-Auslöseeinheit ermöglicht, den besagten Handhebel (7) auf eine Betriebsposition zu heben:
Verbinden der besagten Stromquelle, des besagten ersten normalerweise offenen Schalters, des besagten zweiten normalerweise offenen Schalters sowie des besagten normalerweise geschlossenen Schalters mit der besagten Auslöse-Bauteil in Serie;
Befestigen des besagten Motors auf einem tragenden Element (1), welches fest an dem besagten Fahrzeug angebracht ist;
funktionsmäßiges Verbinden einer Nocke (4) mit einer Abtriebswelle (21) des besagten Motors,
schwenkbares Verbinden des einen Endes eines Hebels (5) an besagtem tragenden Element (1) und Nutzung des anderen freien Endes als erstes Antriebsteil (52),
Ausstattung des besagten Hebels mit einem ersten angetriebenen Teil (51), welche der besagten Nocke zugewandt ist, so dass es von der besagten Nocke angetrieben werden kann;
Verbinden des einen Endes einer ersten Rückstellfeder (10A) mit besagtem tragenden Element (1) und Verbinden des anderen Endes mit besagtem Hebel (5);
Konfigurierung der ersten Rückstellfeder (10A) in solcher Weise, dass sie gegen die Drehung des besagten Hebels wirkt, welcher durch die besagte Nocke angetrieben wird, und besagten Hebel dadurch in seine ursprüngliche Position bringt;
sowie Bereitstellung eines zweiten angetriebenen Teils (71) auf besagtem Parkbremsen-Handgriff (7), welches dem ersten Antriebsteil (52) zugewandt ist, so dass es durch das besagte erste Antriebsteil des besagten Hebels angetrieben werden kann.

## Revendications

1. Un dispositif pour commander automatiquement une poignée de frein à main (7) d'un véhicule, comprenant une unité de commande de poignée pour commander automatiquement ladite poignée de frein à main, dans lequel ladite unité de commande de poignée dispose d'un composant de commande (M;2;1' ) connecté on série avec une alimentation (V, 8' ) sur ledit véhicule, un premier commutateur normalement ouvert (K1) monté sur une porte de véhicule, un second commutateur normalement ouvert (K2) monté sur un siège conducteur, et un troisième commutateur normalement fermé (K3) monté sur ladite poignée de frein à main, de façon à ce que lorsque le conducteur sort du véhicule sans tirer ladite poignée, lesdits premier et second commutateurs normalement ouverts commutent en position « MARCHE », et ainsi ledit composant de commande sera alimenté de façon à permettre à ladite unité de commande de poignée de tirer ladite poignée en une position de service,
dans lequel le composant de commande est un moteur (M,2), et ladite unité de commande de poignée comprend en outre
un membre de support (1) fixé audit véhicule ledit moteur étant monté sur ledit membre de support,
une came (4) fonctionnellement couplée à un arbre de sortie (21) dudit moteur,
un levier (5) avec une extrémité connectée de façon pivotante audit membre de support (1) et une autre extrémité libre servant de partie d'entraînement (52), ledit levier étant doté d'une première partie menée (51) face à ladite came de façon à être propulsé par ladite came,
un ressort de rappel (10A) avec une extrémité connectée audit membre de support et une autre extrémité audit levier (5), ledit ressort de rappel (10A) étant configuré pour agir contre une rotation dudit levier mené par ladite came et ainsi à forcer ledit levier vers sa position originale,
une seconde partie menée (71) montée sur ladite poignée de frein à main (7) et faisant face à ladite partie menée (52) de façon à être menée par ladite première partie menée dudit levier.

2. Le dispositif pour commander automatiquement une poignée de frein à main d'un véhicule selon la revendication 1, comprenant en outre un conjoncteur (9) incluant :
un membre de base (91) monté de façon pivotante sur ledit membre de support (1), ledit commutateur normalement fermé (K3) étant monté sur ledit membre de base,
un bouton-poussolr (92) ajusté sur ledit membre de base (91), pour changer un état dudit commutateur normalement fermé de « MARCHE » à « ARRÊT » lorsque pressé,
une troisième partie menée (94) connectée audit membre de base (91) et faisant face à ladite seconde partie menée (71) de façon à être propulsée par ladite seconde partie menée,
un second ressort de rappel (10B) configuré pour agir contre une rotation dudit conjoncteur mené par ladite seconde partie menée et pour ainsi forcer ledit conjoncteur vers sa position originale,
un second butoir installé (11) sur ledit membre de support et positionné sur une course de retour dudit conjoncteur de façon à prévenir un retour excessif dudit conjoncteur, dans lequel ledit dispositif inclut en outre un membre de presse (8) faisant face audit bouton pressoir pour presser sélectivement et relâcher ledit bouton pressoir (92).

3. Le dispositif pour commander automatiquement une poignée de frein à main d'un véhicule selon la revendication 2, dans lequel les premier et deuxième ressorts de rappel sont incorporés en un ressort (10), qui dispose d'une extrémité connectée à ladite extrémité dudit levier connecté de façon pivotante audit membre de support, et une autre extrémité connectée audit conjoncteur.

4. Le dispositif pour commander automatiquement une poignée de frein à main d'un véhicule selon l'une quelconque des revendications 1 à 3, dans lequel un premier butoir (6) est monté sur ledit membre de support et positionné sur une course de retour dudit levier de façon à prévenir un retour excessif dudit levier,

5. Le dispositif pour commander automatiquement une poignée de frein à main d'un véhicule selon la revendication 2 et l'une quelconque des revendications 1 à 4, dans lequel ledit membre de presse (8) est fixé à une extrémité dudit levier (5) connecté audit membre de support.

6. Le dispositif pour commander automatiquement une poignée de frein à main d'un véhicule selon l'une quelconque des revendications 1 à 5, comprenant en outre un moyen de transmission (3) connecté audit arbre de sortie (21) dudit moteur (M;2), dans lequel ladite came (4) est montée sur un arbre de sortie (31) dudit moyen de transmission.

7. Le dispositif pour commander automatiquement une poignée de frein à main d'un véhicule selon la revendication 6, dans lequel ledit moyen de transmission est un conjoncteur (3).

8. Un procédé pour commander automatiquement une poignée de frein à main d'un véhicule, comprenant les étapes de
fournir une alimentation (V,8' ),
fournir un premier commutateur normalement ouvert (K1) monté sur une porte de véhicule,
fournir un second commutateur normalement ouvert (K2) monté sur un siège conducteur, fournir un commutateur normalement fermé (K3) monté sur ladite poignée de frein à main, fournir une unité de commande de poignée pour commander automatiquement ladite poignée de frein à main, ladite unité de commande de poignée disposant d'un composant de commande (M;2,1' ) consistant en un moteur (M,2) qui lorsqu'il est alimenté permet à ladite unité de commande de poignée de tirer ladite poignée (7) vers une position de service,
connecter ladite alimentation, ledit premier commutateur normalement ouvert, ledit second commutateur normalement ouvert, ledit commutateur normalement fermé, avec ledit composant de commande en série,
monter ledit moteur sur un membre de support (1) fixé audit véhicule,
fonctionnellement coupler une came (4) à un arbre de sortie (21) dudit moteur,
connecter de façon pivotante une extrémité d'un levier (5) audit membre de support (1) et ligaturer une autre extrémité libre en tant que partie entraînante (52),
fournir ledit levier avec une première partie menée (51) faisant face à ladite came de façon à être propulsée par ladite came,
connecter une extrémité d'un premier ressort de rappel (10A) audit membre de support et connecter ladite extrémité audit levier (5),
configurer ledit premier ressort de retour (10A) pour agir contre une rotation dudit levier mené par ladite came et ainsi forcer ledit levier vers sa position originale, et
fournir une seconde partie menée (71) sur ladite poignée de frein à main (7) et faisant face à ladite première partie d'entraînement (52) de façon à être menée par ladite première partie d'entraînement dudit levier.
